# EUROPÄISCHE PATENTSCHRIFT

(11) **EP 1 724 305 B1**
(45) Veröffentlichungstag und Bekanntmachung des Hinweises auf die Patenterteilung: **20.02.2008**
(21) Anmeldenummer: 06113777.4
(22) Anmeldetag: 10.05.2006
(51) Int. Cl.: C08L 39/06, B29C 47/10

(54) **Verfahren zur Herstellung von festen Blends aus Polyvinylpyrrolidonen und ethoxilierten Fettsäurederivaten**
Process for preparing solid blends of polyvinylpyrrolidones and ethoxylated fatty acid derivatives
Procédé de préparation des mélanges solides de polyvinylpyrrolidones et de dérivés d'acides gras éthoxylés

(30) Priorität: 19.05.2005 DE 102005023803
(43) Veröffentlichungstag der Anmeldung: 22.11.2006
(73) Patentinhaber: BASF AKTIENGESELLSCHAFT, 67056 Ludwigshafen (DE)
(72) Erfinder: Schillo, Simone, 67069, Ludwigshafen (DE); Lange, Ronald Frans Maria, 67061, Ludwigshafen (DE)

(56) Entgegenhaltungen:
- EP-A- 0 943 340
- WO-A-00/57855
- US-A1- 2004 110 694

## Beschreibung

Die vorliegende Erfindung betrifft ein verbessertes Verfahren zur Herstellung von festen Blends aus Polyvinylpyrrolidonen und ethoxilierten Fettsäurederivaten durch Verarbeitung in einem Extruder.

Ethoxilierte Fettsäurederivate werden häufig als Lösungsvermittler für Formulierungen von in Wasser schwerlöslichen Wirkstoffen verwendet, um die Bioverfügbarkeit solcher Wirkstoffe zu verbessern. Da solche Fettsäurederivate bei Raumtemperatur flüssig oder halbfest sind, bereitet die Einarbeitung von für die Wirksamkeit als Lösungsvermittler relevanten Mengen in Formulierungen häufig Probleme.

In der WO 2000/057855 ist die Herstellung von pulverförmigen Hilfsstoffen aus Homo- oder Copolymeren des N-Vinylpyrrolidons und flüssigen oder halbfesten Solubilisatoren wie ethoxiliertem Rizinusöl beschrieben. Die Hilfsstoffe werden durch Sprühtrocknung einer Lösung der Komponenten erhalten oder durch Verarbeitung der Komponenten in einem Extruder, wobei die Komponenten dem Extruder in fester Form zugeführt und zur Vermischung in Abwesenheit von Lösungsmittel aufgeschmolzen werden. Allerdings hat sich gezeigt, dass diese Vorgehensweise bezüglich Effizienz und Produktstabilität noch der Verbesserung bedarf. So lassen sich durch Sprühtrocknung keine höherkonzentrierten Polymerlösungen verarbeiten. Die Schmelzextrusion in Abwesenheit von Lösungsmittel erfordert eine vorherige Aufarbeitung der Polymerisationslösungen. Hinzu kommt, dass bei höheren Beladungen mit den ethoxilierten Fettsäuren bei den beschriebenen Vorgehensweisen eine Entmischung durch Phasenseparation der Komponenten auftreten kann.

Aufgabe der vorliegenden Erfindung war es, ein verbessertes Verfahren zur Herstellung von Blends aus Polyvinylpyrrolidonen und ethoxilierten Fettsäurederivaten zu finden, welches die geschilderten Nachteile vermeidet.

Demgemäß wurde ein Verfahren zur Herstellung von festen Blends aus Polyvinylpyrrolidonen und ethoxilierten Fettsäurederivaten durch Verarbeitung der Komponenten in einem Extruder gefunden, welches dadurch gekennzeichnet ist, dass die Polyvinylpyrrolidone dem Extruder in Form von wässrigen Lösungen zugeführt werden und das Lösungsmittel während des Extrusionsvorgangs entfernt wird.

Als Polyvinylpyrrolidone werden erfindungsgemäß die Homo- und Copolymere des N-Vinylpyrrolidons mit K-Werten nach Fikentscher von 12 bis 100, bevorzugt 17 bis 30, bezeichnet. Als Copolymere eignen sich vor allem Copolymere mit Vinylestern von C₁₋C₂₀-Carbonsäuren, beispielsweise Vinylacetat, Vinylpropionat, Vinyllaurat oder Vinylstearat, vorzugsweise Vinylacetat. Die Vinylester-Comonomere können in Mengen von bis zu 60 Gew.-% enthalten sein. Als Polyvinylpyrrolidone werden besonders bevorzugt das Homopolymer oder Copovidon, ein Copolymer aus N-Vinylpyrroldion und Vinylacetat im Mengenverhältnis 60/40, verwendet. Die K-Werte nach Fikentscher können von 10 bis 100 betragen. Die Polyvinylpyrrolidone werden in Form wässriger Lösungen mit Feststoffgehalten von 30 bis 70 Gew.-%, bevorzugt 40 bis 60 Gew.-% eingesetzt.

Als ethoxilierte Fettsäurederivate werden Umsetzungsprodukte von Ethylenoxid mit Rizinusöl, hydriertem Rizinusöl oder 12-Hydroxystearinsäure bezeichnet. Geeignete Produkte sind beispielsweise Polyoxyethylenglycerol-ricinolat-35, Polyoxyethylenglyceroltrihydroxystearat , PEG_660-12-Hydroxystearinsäure (Polyglykolester der 12-Hydroxystearinsäure mit 30 mol-% Ethylenglykol) oder bevorzugt ein Umsetzungsprodukt von 1 mol hydriertem Rizinusöl mit 45 mol Ethylenoxid (Cremophor® RH40).

Als Blends werden Mischungen von chemisch verschiedenen Komponenten bezeichnet. Im Falle der vorliegenden Erfindung bestehen die Blends aus einer thermoplastischen Polyvinylpyrrolidon-Komponente und einem ethoxilierten Fettsäurederivat, wobei die Blends mit physikalischen Methoden nicht in die Einzelkomponenten zerlegt werden können.

Die Blends enthalten erfindungsgemäß 40 bis 90 Gew.-%, vorzugsweise 50 bis 80 Gew.-% eines Polyvinylpyrrolidons und 10 bis 60 Gew.-%, vorzugsweise 20 bis 50 Gew.-% eines ethoxilierten Fettsäurederivats, wobei sich die Mengenangaben auf das Gesamtgewicht des Blends beziehen.

Die Herstellung der Blends erfolgt durch gemeinsame Verarbeitung einer wässrigen Lösung eines Polyvinylpyrrolidons und eines ethoxilierten Fettsäurederivats im Extruder.

Für das erfindungsgemäße Verfahren eignen sich prinzipiell die üblichen, dem Fachmann bekannten Extrudertypen. Diese umfassen üblicherweise ein Gehäuse, eine Antriebseinheit sowie eine Plastifizier- oder Mischeinheit aus einer oder mehreren mit Förder- oder Knetelementen versehenen rotierenden Achsen (Schnecken) sowie vorrichtungen zum Entfernen von Lösungsmittel.

Längs der Schnecken erstrecken sich in Transportrichtung mehrere Abschnitte, die im erfindungsgemäßen Verfahren eine Einzugs- und Förderzone, eine Mischzone und eine Ausstosszone umfassen. Weiterhin können auch Entgasungszonen vorgesehen sein, wobei die Entgasung bei Atmosphärendruck und/oder Vakuum erfolgen kann. Die Vakuumentgasung kann beispielsweise mit Hilfe einer Stopfschnecke und einer Dampfstrahlpumpe erfolgen.

Jeder dieser Abschnitte kann wiederum einen oder mehrere Zylinder (Schüsse) als kleinste unabhängige Einheit enthalten.

Die Herstellung der Blends kann in einem Zweischneckenextruder oder in Mehrschneckenextrudern erfolgen, bevorzugt aber in einem Zweischneckenextruder. Bei Verwendung von Mehrschneckenextrudern können mehrere Schnecken gleichsinnig dicht kämmend ausgeführt sein. Der Extruder ist vorzugsweise gleichsinnig dicht kämmend ausgelegt. Die einzelnen Zylinder sollen beheizbar sein. Weiterhin können die Zylinder auch für eine Kühlung ausgelegt sein, beispielsweise für Kühlung mit Wasser.

Die Schnecken können aus allen in der Extrusion üblichen Elementen aufgebaut sein. Sie können neben üblichen Förderelementen auch Knetscheiben oder Rückförderelemente enthalten. Welche Schneckenkonfiguration im Einzelfall geeignet ist, kann der Fachmann durch einfache Versuche ermitteln. Es können auch zwei oder mehrere Extruder hintereinander geschaltet werden.

Um eine ausreichende Vermischung der Komponenten zu erzielen, wird die Verweilzeit des Materials im Extruder entsprechend lange gewählt. Dies kann über die Extruderdimensionen gesteuert werden, wobei als Kenngröße das Verhältnis von Schraubenlänge zu Schraubendurchmesser herangezogen wird. Das Verhältnis von Schraubenlänge zu Schraubendurchmesser (L/D-Verhältnis) kann erfindungsgemäß 40 :1 bis 70:1 betragen, vorzugsweise 50:1 bis 60:1.

Der erfindungsgemäß verwendete Extruder gliedert sich im wesentlichen in folgende Abschnitte auf:

In einem ersten Abschnitt wird die Lösung des Polyvinylpyrrolidons in den Extruder eingebracht. Die Schneckengeometrie in diesem Abschnitt entspricht den für das Fördern üblichen Bedingungen. An den mit einer Zufuhrvorrichtung versehenen Zylinder schliessen sich mehrere Zylinder, beispielsweise drei bis sechs, an, die mit Vorrichtungen zum Anlegen eines Vakuums oder zur Entgasung ausgestattet sein können. Die Polymerlösung wird vor der Zugabe des Fettsäurederivats im nächsten Abschnitt vorzugsweise vorentlüftet oder entgast. Die Entgasung/Entlüftung erfolgt bei Drücken von 0.005 bis 0.1 MPa, vorzugsweise bei Atmosphärendruck. Dabei wird ein Teil des Wassers entfernt.

In einem zweiten Abschnitt, der als Mischzone ausgelegt ist, wird das ethoxilierte Fettsäurederivat zugefahren. Die Komponenten werden dann innig vermischt, sodass das Polyvinylpyrrolidon homogen mit dem ethoxilierten Fettsäurederivat dispergiert wird.

Dieser Abschnitt enthält ebenfalls übliche Förderelemente. Zur Förderung der Vermischung kann es sich empfehlen zusätzlich Knetscheiben einzubauen. Weiterhin kann es sich empfehlen für eine zusätzliche Verbesserung der Vermischung auch Rückförderelemente einzubauen. Für diesen Abschnitt werden üblicherweise ebenfalls mehrere Zylinder, beispielsweise 3 bis 6 Zylinder, vorgesehen.

Anschliessend wird die Masse weiter in Richtung Austragsöffnung gefördert. Dieser Abschnitt kann je nach Menge der zu verarbeitenden Masse aus ein bis drei Zylindern aufgebaut sein.

In dem dritten Abschnitt zwischen Mischzone und der Austragsöffnung kann auch eine weitere Entgasungszone mit einem oder mehreren Zylindern vorgesehen sein, wobei die Entgasung bei Atmosphärendruck und/oder Vakuum erfolgen kann. Vorzugsweise erfolgt die Entgasung bei Drücken von 0.005 bis 0.1 MPa. Zwischen Entgasungszone und Austragsöffnung können weitere Zylinder vorgesehen sein.

Anschliessend wird die noch plastische Masse aus dem Extruder ausgetragen. Die Austragung kann über übliche Düsen-, Lochplatten oder andere geeignete Vorrichtungen erfolgen. Als Düse kann vorzugsweise eine Breitschlitzdüse verwendet werden. Nach einer weiteren bevorzugten Ausführungsform kann die Masse über den offenen Extruderkopf ausgefahren werden.

Die Manteltemperatur der Einfüllzone für die Polyvinylpyrrolidon-Lösung beträgt üblicherweise 20 bis 30 °C. Alle übrigen Zonen wie auch Übergangsstücke zwischen Extruder und Düsenplatte sowie die Düsenplatte selbst werden beheizt, um die Plastizität der Masse zu gewährleisten.
Üblicherweise wird die Manteltemperatur der Extruderschüsse und die Temperatur an der Austragsöffnung 60 bis 150°C, vorzugsweise 100 bis 140°C betragen.

Nach dem Austragen wird der noch plastische Blend abgekühlt. Dies kann bei Raumtemperatur erfolgen oder durch Kühlung mit einem kalten Gastrom, beispielsweise Luft oder Stickstoff. Eine weitere Möglichkeit ist die Gefriertrocknung, beispielsweise in flüssigem Stickstoff.

Nach dem Abkühlen kann die Formgebung mit geeigneten, an sich bekannten Vorrichtungen erfolgen, beispielsweise durch Schneiden oder Mahlen des abgekühlten Blends. Für Mahlverfahren eignen sich insbesondere gefriergetrocknete Blends.

Die nach dem erfindungsgemäßen Verfahren erhaltenen Blends stellen stabile Mischungen dar, in denen die Komponenten als homogene Dispersion vorliegen. Auch nach mehrmonatiger Lagerung findet keine Phasenseparation statt.

### Beispiel

Es wurde ein fester Blend aus Copovidon und Cremophor RH40 im Gewichtsverhältnis 1:1 hergestellt. Das Copovidon wurde in Form einer 50 gew.-%igen wässrigen Lösung eingesetzt.
Die Verarbeitung der Komponenten erfolgte in einem mit Förder- und Mischelementen sowie mit Entgasungsvorrichtungen ausgestatteten Doppelschneckenextruder ZSK 30 der Fa. Coperion Werner & Pfleiderer. Der Extruder bestand aus 18 Zylindern und einem Düsenkopf, wobei insgesamt das L/D-Verhältnis 56:1 betrug. Der Extruder wurde mit einer Drehzahl von 150 Upm betrieben bei einem Durchsatz von 5 kg/h. Die wässrige Copovidon-Lösung wurde in Zylinder 1 bei 30 °C Manteltemperatur kontinuierlich über eine Pumpe zugeführt. Daran schloss sich eine Entgasungszone aus 5 Zylindern an (Manteltemperaturen: 80/140/140/140/140 °C), wobei die Entgasung bei Atmosphärendruck erfolgte, sowie ein weiterer Zylinder mit einer Manteltemperatur von 120 °C. Im darauffolgenden Zylinder erfolgte die kontinuierliche Zudosierung von Cremophor RH40 bei einer Manteltemperatur von 100 °C. In der sich daran anschliessenden Mischzone aus vier Zylindern betrug die Manteltemperatur 80 °C. Die sich daran anschliessende aus sechs Zylindern bestehende Förder- und Entgasungszone wurde mit Manteltemperaturen von 100 °C betrieben, die Entgasung erfolgte bei leichtem Vakuum (0,090 MPa) . Anschliessend wurde die Masse über eine Düse bei einer Düsentemperatur von 100 °C ausgetragen und abgekühlt.

Der so erhaltene feste Blend stellte eine homogene Masse dar, die auch nach 6 Monaten Lagerung bei 20 °C keine Entmischung zeigte.

## Patentansprüche

1. Verfahren zur Herstellung von festen Blends aus Polyvinylpyrrolidonen und e-thoxilierten Fettsäurederivaten durch Verarbeitung der Komponenten in einem Extruder, **dadurch gekennzeichnet, dass** die Polyvinylpyrrolidone dem Extruder in Form von wässrigen Lösungen zugeführt werden und das Lösungsmittel während des Extrusionsvorgangs entfernt wird.

2. Verfahren nach Anspruch 1, **dadurch gekennzeichnet, dass** die wässrigen Lösungen der Polyvinylpyrrolidone Feststoffgehalte von 30 bis 70 Gew.-% aufweisen.

3. Verfahren nach Anspruch 1 oder 2 , **dadurch gekennzeichnet, dass** die Entfernung des Lösungsmittel bei Drücken von 0.005 bis 0.1 MPa erfolgt.

4. Verfahren nach einem der Ansprüche 1 bis 3, **dadurch gekennzeichnet, dass** die Herstellung bei Manteltemperaturen von 60 bis 150 °C erfolgt.

5. Verfahren nach einem der Ansprüche 1 bis 4 , **dadurch gekennzeichnet, dass** ein Extruder verwendet wird, bei dem das Verhältnis von Schraubenlänge zu Schraubendurchmesser 40:1 bis 70:1 beträgt.

6. Verfahren nach einem der Ansprüche 1 bis 5, **dadurch gekennzeichnet, dass** als Polyvinylpyrrolidon ein Copolymer von N-Vinylpyrrolidon und Vinylacetat im Gewichtsverhältnis 6:4 verwendet wird.

7. Verfahren nach einem der Ansprüche 1 bis 6, **dadurch gekennzeichnet, dass** als ethoxiliertes Fettsäurederivat ein Umsetzungsprodukt aus 1 Mol hydriertem Rizinusöl mit 45 Mol Ethylenoxid verwendet wird.

8. Verfahren nach einem der Ansprüche 1 bis 7, **dadurch gekennzeichnet, dass** die resultierenden Blends 40 bis 90 Gew.-% Polyvinylpyrrolidon und 10 bis 60 Gew.-% ethoxilierte Fettsäurederivate enthalten.

9. Verfahren nach einem der Ansprüche 1 bis 8, **dadurch gekennzeichnet, dass** die resultierenden Blends 50 bis 80 Gew.-% Polyvinylpyrrolidone und 20 bis 50 Gew.-% ethoxilierte Fettsäurederivate enthalten.

## Claims

1. A process for preparation of solid blends composed of polyvinylpyrrolidones and of ethoxylated fatty acid derivatives via processing of the components in an extruder, which comprises introducing the polyvinylpyrrolidones into the extruder in the form of aqueous solutions, and removing the solvent during the extrusion procedure.

2. The process according to claim 1, wherein the solids contents of the aqueous solutions of the polyvinylpyrrolidones are from 30 to 70% by weight.

3. The process according to claim 1 or 2, wherein the removal of the solvent takes place at pressures of from 0.005 to 0.1 MPa.

4. The process according to any of claims 1 to 3, wherein the jacket temperatures during the preparation process are from 60 to 150°C.

5. The process according to any of claims 1 to 4, which uses an extruder in which the ratio of screw length to screw diameter is from 40:1 to 70:1.

6. The process according to any of claims 1 to 5, wherein the polyvinylpyrrolidone used comprises a copolymer of N-vinylpyrrolidone and vinyl acetate in a ratio of 6:4 by weight.

7. The process according to any of claims 1 to 6, wherein the ethoxylated fatty acid derivative used comprises a reaction product derived from 1 mol of hydrogenated castor oil with 45 mol of ethylene oxide.

8. The process according to any of claims 1 to 7, wherein the resultant blends comprise from 40 to 90% by weight of polyvinylpyrrolidone and from 10 to 60% by weight of ethoxylated fatty acid derivatives.

9. The process according to any of claims 1 to 8, wherein the resultant blends comprise from 50 to 80% by weight of polyvinylpyrrolidones and from 20 to 50% by weight of ethoxylated fatty acid derivatives.

## Revendications

1. Procédé de préparation de mélanges solides à partir de polyvinylpyrrolidones et de dérivés d'acide gras éthoxylés grâce à une transformation des composants dans une extrudeuse, **caractérisé en ce que** les polyvinylpyrrolidones sont amenées à l'extrudeuse sous forme de solutions aqueuses et le solvant est éliminé pendant le processus d'extrusion.

2. Procédé selon la revendication 1, **caractérisé en ce que** les solutions aqueuses des polyvinylpyrrolidones présentent des teneurs en matières solides de 30 à 70 % en poids.

3. Procédé selon la revendication 1 ou 2, **caractérisé en ce que** l'élimination du solvant a lieu à des pressions de 0,005 à 0,1 MPa.

4. Procédé selon l'une quelconque des revendications 1 à 3, **caractérisé en ce que** la préparation a lieu à des températures d'enveloppe de 60 à 150°C.

5. Procédé selon l'une quelconque des revendications 1 à 4, **caractérisé en ce qu'**une extrudeuse est utilisée, pour laquelle le rapport de la longueur de vis sur le diamètre de vis est de 40:1 à 70:1.

6. Procédé selon l'une quelconque des revendications 1 à 5, **caractérisé en ce qu'**un copolymère de N-vinylpyrrolidone et d'acétate de vinyle en un rapport de poids de 6:4 est utilisé en tant que polyvinylpyrrolidone.

7. Procédé selon l'une quelconque des revendications 1 à 6, **caractérisé en ce qu'**un produit de réaction de 1 mole d'huile de ricin hydrogénée avec 45 moles d'oxyde d'éthylène est utilisé en tant que dérivé d'acide gras éthoxylé.

8. Procédé selon l'une quelconque des revendications 1 à 7, **caractérisé en ce que** les mélanges résultants contiennent 40 à 90 % en poids de polyvinylpyrrolidone et 10 à 60 % en poids de dérivés d'acide gras éthoxylés.

9. Procédé selon l'une quelconque des revendications 1 à 8, **caractérisé en ce que** les mélanges résultants contiennent 50 à 80 % en poids de polyvinylpyrrolidone et 20 à 50 % en poids de dérivés d'acide gras éthoxylés.
